(19) Europäisches Patentamt
European Patent Office
Office européen des brevets

(11) **EP 2 328 845 B1**

(12) **EUROPEAN PATENT SPECIFICATION**

(45) Date of publication and mention
of the grant of the patent:
**04.04.2012 Bulletin 2012/14**

(21) Application number: **09790884.2**

(22) Date of filing: **28.07.2009**

(51) Int Cl.:
*C02F 3/20* *(2006.01)*    *C02F 3/10* *(2006.01)*
*C02F 3/28* *(2006.01)*

(86) International application number:
**PCT/US2009/051957**

(87) International publication number:
**WO 2010/014605 (04.02.2010 Gazette 2010/05)**

(54) **RADIAL FLOW MEMBRANE BIOFILM REACTOR**

RADIALSTROM-MEMBRANBIOFILMREAKTOR

RÉACTEUR À BIOFILM À MEMBRANE À ÉCOULEMENT RADIAL

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **28.07.2008 US 84250 P**

(43) Date of publication of application:
**08.06.2011 Bulletin 2011/23**

(73) Proprietor: **Aptwater, Inc.**
**Pleasant Hill, CA 94523 (US)**

(72) Inventor: **BOWMAN, Reid, H.**
**Ojai**
**CA 93023 (US)**

(74) Representative: **Vossius & Partner**
**Siebertstrasse 4**
**81675 München (DE)**

(56) References cited:
**EP-A- 1 270 063       EP-A- 1 859 853
WO-A-2009/035699    US-A- 4 758 341
US-A1- 2002 020 666    US-A1- 2008 093 299**

**Description**

The present devices, systems, and methods relate to improved membrane biofilm reactors (MBfR) for water treatment.

The membrane biofilm reactor (MBfR) was described by Rittmann (Adham et al., AWWA Research Foundation Report. P. 156 (2005); U.S Pat. No. 6.387,262). In a typical MBfR device, a matrix of hollow fiber membranes provides a growth surface for a biofilm capable of metabolizing contaminants present in an effluent stream. Gas is introduced into the lumen of the hollow fiber membranes, where it diffuses through the walls of the membrane to contact a biomass growing on the external surfaces of the hollow fiber membranes. The gas may serve as an electron donor for reducing oxidized contaminants. Gas utilization efficiency can be nearly 100%, minimizing the release of excess gas into the atmosphere, which is desirable since flammable hydrogen ($H_2$) gas is often used as an electron donor. Efficient gas utilization also lowers operating costs.

EP 10270063 discloses a contactor for degassing a liquid including a perforated core and a microporous membrane fabric wrapped around the core. The fabric includes a polymethyl pentene hollow fiber as a weft fiber and a warp yam. A tube sheet secures the ends of the wound fiber and a shell encases the tube sheet and fabric. The shell has at least one opening to permit fluid flow through the shell and an end cap.

US 2002/0020666 discloses an apparatus to transfer gas to or from a liquid that has a flexible membrane, a flexible spacer, an inlet conduit, an outlet conduit and a non-rigid restraint system. When used for treating wastewater, an aerobic biofilm is cultured adjacent the planar elements, an anoxic biofilm is cultivated adjacent the aerobic biofilm and the wastewater is maintained in an anaerobic state. A first reactor for treating wastewater has an anaerobic section, a plurality of gas transfer membrane modules, and an aerobic section. A biofilm is cultivated on the surface of the gas transfer membranes in fluid communication with the anaerobic section.

While conventional MBfR devices function well in a laboratory or controlled testing environment, the use of MBfR devices in the field is more problematic. High packing density improves the efficiency of MBfR, determining how many contaminants can be removed from effluent water in a given amount of time in a given size MBfR device. However, high packing density leads to biofouling, which increases operating costs by reducing the efficiency of MBfR operation and requiring maintenance to the MBfR (*e.g.*, backwashing, disassembly, cleaning, etc.).

The need exists for MBfR devices and systems that maximize packing density while minimizing fouling.

The following aspects and embodiments thereof described and illustrated below are meant to be exemplary and illustrative, not limiting in scope.

In one aspect, a membrane biofilm reactor (MBfR) device is provided. The device comprises a central core tube having a wall defining a lumen and one or more perforations in the wall defining a perforated region, the core tube further having a first open end and second substantially closed end; a plurality of hollow filaments, each filament having a wall that defines an inner lumen, an exterior surface, a first end, and a second end; and a case having a cavity, a first end cap, a second end cap, and at least one effluent port. The first open end of the core tube is sealed in the first end cap with the perforated region extending into the central cavity of the case, and wherein the first ends of the plurality of hollow filaments are open and sealed in the first end cap and the second ends of the plurality of hollow filaments are open and sealed in the second end cap.

The core tube comprises a fitting adaptable for coupleing with an influent liquid source, for introducing the influent liquid into the lumen of the tube. In another embodiment, one or both of the first and second end caps comprise a fitting, for coupling with a gas source for introducing a gas into the inner lumens of the filaments in the plurality of hollow filaments.

In another embodiment, the device further includes a drain port in communication with the lumens of the plurality of hollow filaments for draining inerts from the lumens of the plurality of hollow filaments. In one embodiment, the drain port is positioned in the device at the opposite end from where the gas is introduced into the lumens of the plurality of filaments.

In one embodiment, the first end cap and second end cap are sealed in the case.

In another embodiment, the hollow filaments are combined with one or more warp fibers, to form a fabric. In yet another embodiment, the fabric is wound spirally about the core tube, forming radial layers of fabric extending radially outward from the core tube. In still another embodiment, the radial layers of fabric are separated by an interleaf material. In a further embodiment, the plurality of hollow filaments are both combined with warp fibers and separated by an interleaf material.

In still another embodiment, the device is oriented vertically with the first end cap below the second end cap, the first end cap is adapted for ingress of the influent liquid and the second end cap is adapted for ingress of the gas.

In another embodiment, the hollow filaments are made of a polyester, a cellulose triacetate, a composite of polyethylene and polyurethane. In preferred embodiments, the hollow filaments are composed of polypropylene, polyvinylchloride, or poly(ethylene terephthalate).

The device further comprises at least one scouring gas inlet port. In particular embodiments, the at least one scouring gas inlet port is located in a bottom region of the case. In particular embodiments, the at least one scouring gas inlet port is a plurality of scouring gas inlet ports located in a bottom region of the case.

In another aspect, a system comprising a plurality of the devices described are provided, wherein the devices are arranged in parallel or series.

In yet another aspect, a method for reducing fouling of a MBfR device by a biomass is provided. The method comprises providing a device having a central core tube with a wall defining a lumen and one or more perforations in the wall, a plurality of hollow filaments surrounding the core tube, each filament having a wall defining an inner lumen and an external surface, and a case housing the central core tube and the plurality of hollow filaments, introducing a liquid influent into the central core tube, introducing a gas into the inner lumens of the plurality of hollow filaments, said gas supporting growth of a biomass on the external surfaces of the hollow filaments, permitting the liquid influent to flow through said one or more perforations to contact the biomass on the external surfaces of the filaments, said flow of liquid influent defining a radial flow path in the device, and collecting the effluent water at one or more effluent ports disposed on said case, wherein the radial flow path of the influent liquid reduces fouling of the device by the biomass.

In one embodiment, a first portion of the effluent is recirculated through the device. In another embodiment, 40-50%of the effluent is recirculated through the device. A second portion of the effluent may be discharged as treated effluent or used as influent in a further treatment stage.

In yet another embodiment, the liquid effluent is introduced into the central core tube at a first end of the device and a gas is introduced to the hollow filaments at a second end of the device.

In other embodiments, a periodic scouring cycle is included, wherein a scouring gas is introduced into the hollow central core tube. In some embodiments, a scouring gas is introduced into a bottom region of the case.

In some embodiments, a periodic backwash cycle, wherein liquid is introduced into at least one effluent port, is performed. In particular embodiments, a scouring gas is introduced into a bottom region of the during the periodic backwash cycle.

In addition to the exemplary aspects and embodiments described above, further aspects and embodiments will become apparent by reference to the drawings and by study of the following descriptions.

Figs. 1A-1E illustrate features of prior art MBfR devices.

Figs. 2A-2B illustrate features of exemplary radial flow MBfR device.

Figs. 3A-3D show aspect views of hollow filaments, warp fibers, and interleaf materials.

Fig. 4 shows a schematic diagram of a system for testing the exemplary radial flow MBfR.

Figs 5A-5B are Tables showing features and performance characteristics of exemplary radial flow MBfR devices.

Figs. 6A-6D are Tables showing the performance of exemplary radial flow MBfR devices.

Fig. 7 shows theoretical nitrate flux for a non-steady-state biofilm as a function of nitrate concentration.

### I. Introduction

Several MBfR devices were made and tested to ascertain a maximize filament packing density and to minimize biofilm fouling. As will be described below, it was found that devices with a radial fluid flow design, in which influent liquid enters the center of the device to flow in a radial, outward direction to contact a plurality of hollow filaments, which support the growth of a biomass, provided minimal biofilm fouling of the filaments and desirable packing density of the filaments. Radial flow MBfR design aspects and features are now described.

### II. Definitions

Prior to describing features of the present device and methods, the following terms are defined for clarity. Terms and abbreviations not defined should be accorded their ordinary meaning as used in the art.

As used herein, the terms "biofilm" and "biomass" refer collectively to organisms that grow on the exterior surface of hollow filaments in an MBfR. Such organisms typically affect removal of one or more contaminants present in influent liquid entering the MBfR. One skilled in the art will appreciate that a biofilm or biomass accumulates in an MBfR during operation, and that the present MBfR device supports the growth of, but does not include, a biofilm/biomass.

As used herein, the term "biofouling" refers to the process by which a biofilm/biomass clogs, blocks, or otherwise restricts fluid and/or gas flow in an MBfR.

As used herein, the terms "inerts" and "inert materials" refer collectively to debris and other material that accumulates in the lumen of the hollow fibers. Such debris and material includes but is not limited to particulate matter present in the gas introduced into the lumen of hollow fibers, liquid and solutes that diffuse into the lumen from the exterior surfaces of the hollow fibers, organisms that grow in the lumen of the hollow fibers, and dust.

As used herein, the term "interleaf" or "interleaf material" refers to a porous, substantially planer material used to separate and maintain the spacing of the hollow filaments. An exemplary material is an open mesh made from recyclable plastic.

As used herein, the term "warp fiber" refers broadly to inert fibers (*i.e.*, fibers not required to support a biomass) that can be combined with hollow filaments to separate and maintain the spacing of the hollow filaments. The warp fibers may be uniformly spaced along the length of the hollow filaments, and may be under sufficient tension to limit the movement of the hollow fibers, which assists in maintaining spacing. Exemplary warp fibers are made from recyclable plastic.

II. Conventional Flow MBfR devices

The problem of biofouling in MBfR devices is well known and takes the form of (i) high back pressure, (ii) rapid fouling after recycling, and/or (iii) progressive fouling, despite regular recycling, and variations, thereof. Biofouling is characterized by an increased pressure drop across the MBfR device, which is generally accompanied by an increase in the residual contaminant levels. Biofouling can also be discerned by analyzing the effluent for the number and type of microbes present, *e.g.,* by counting colonies, measuring enzyme levels, etc.

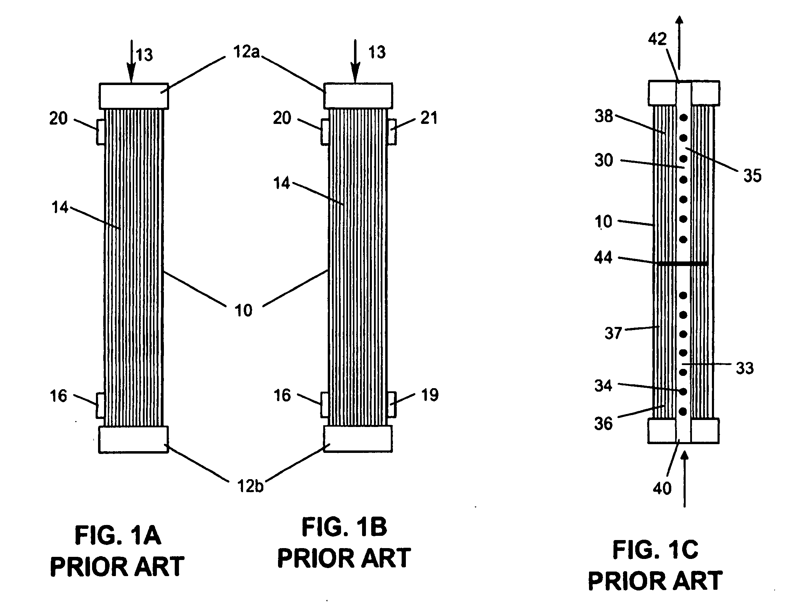

The designs of several conventional-flow MBfR devices are illustrated in Figs. 1A-1C. The devices generally include a case or housing 10, first and second end caps 12a, 12b, and a plurality of hollow filaments 14 sealed in the end caps. The lumens of the hollow filaments are open to a flow of gas introduced at one of the end caps, such as at end cap 12a, as indicated by arrows 13. Influent liquid (typically contaminated water) enters the case through an influent/inlet port 16 and is discharged through an effluent/discharge port 20. The device in Fig. 1B includes an additional influent port 19 and an additional effluent port 21. In this embodiment, the hollow filaments are loosely packed into the case, with no warp fibers.

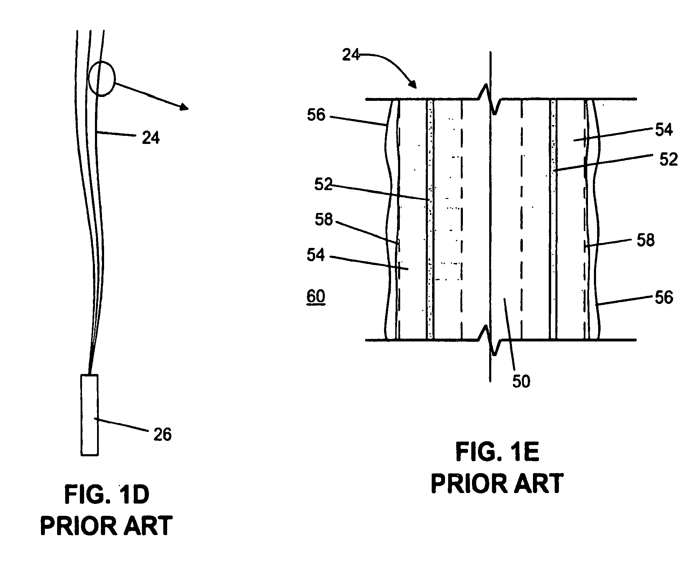

A more detailed view of the hollow filaments is shown in Figs. 1D-1E. As seen in Fig. 1D, individual filaments in the plurality of filaments, such as filament 24, are potted at a filament end, thus defining a manifold 26 for distributing gas to the lumen of the filaments. An exemplary prior art hollow filament is shown in Fig. 1E, where a lumen 50 is formed by a 1-μm thick nonporous, hydrophobic polyurethane layer 52 sandwiched between micro-porous polyethylene walls 54. Exterior surface 58 of the filament supports growth of a biofilm 56 for interacting with contaminated water 60.

With reference now to Fig. 1C, the device shown represents an attempt to improve flow through an MBfR module. A central core tube 30 is separated into a distribution portion 33 and a collection portion 35 by a central baffle 44. The core tube includes perforations, such as perforation 34, for distributing influent water as follows. Influent water enters from an influent port 40, flows through the perforations in the distribution portion 33 of the center tube, and initially contacts the plurality of hollow filaments 37 in the lower region of the device 36. Effluent water from the plurality of hollow filaments in the upper region of the device 38 enters collection portion 35 of the core tube with perforations 34 for collecting water for discharge from the effluent port 42.

Central baffle 44 prevents influent water from flowing from the distribution core tube portion 30 directly to the collection core tube portion 32, thereby reducing contact with the hollow filaments. A similar device may be constructed using separate/discrete distribution and collection core tubes, each terminating inside the case, rather than a single tube traversing the case with a baffle installed to separate the distribution and collection portions.

All three MBfR devices shown in Figs. 1A-1C suffer from biofouling issues. Air scouring and high hydraulic flow rates were effective in controlling biofouling and maintaining even flow distribution in the devices of Figs. 1A-1B, but ineffective in controlling biofouling in the device of Fig. 1C. The device of Fig. 1C produced a high pressure drop, attributed to a combination of fouling and the compression of the filaments against the collection core tube, which restricted water flow through the perforations in the collection core tube (Adham *et al., supra,* at 81).

II. Radial Flow MBfR Device

A. Design

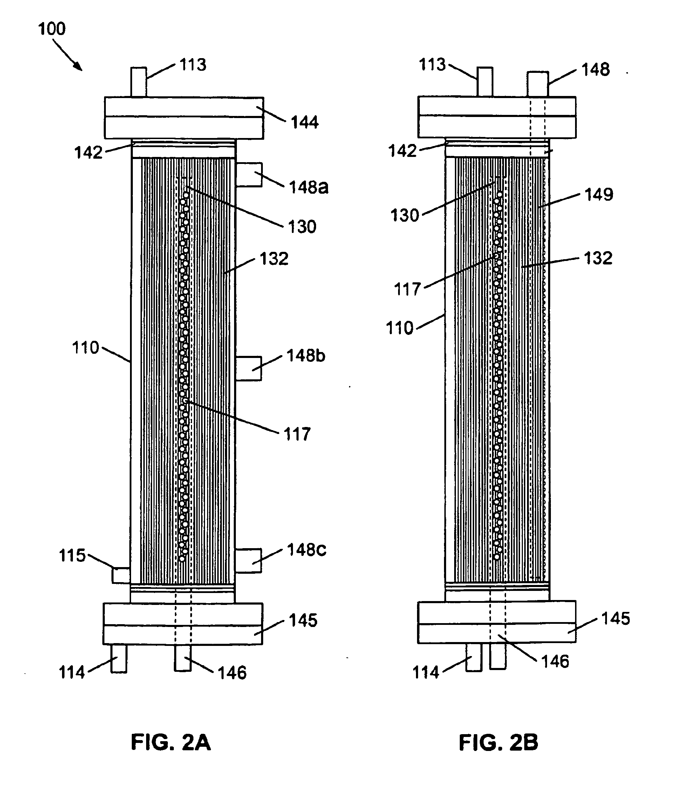

An improved radial flow MBfR design is now described with reference to Figs. 2-3. With initial reference to Fig. 2A, radial flow MBfR device 100 includes a case 110, perforated central core tube 130, and a plurality of follow filaments 132 affixed, for example by potting, at a top end cap 144 and at bottom end cap 145. Case 110 has a wall with an interior surface, the wall defining a cavity or bore. The cavity of the case is adapted to engagingly receive the first and second end caps, which may optionally include one or more O-rings, quadrings, or other seal types 142 for sealing against the interior surface of the case.

The central core tube comprises a perforated region 117 with one or more perforations in the wall of the tube. A first end of the core tube is preferably open to fluid and/or gas flow, while a second end should be substantially closed to direct fluid/gas that enters the lumen of the tube out through the perforations in the wall of the tube. In the embodiment of Fig. 2A, the end of the core tube adjacent an influent port 146 is open, for fluid communication with an external influent fluid supply, and the opposing end of the core tube (with respect to the drawing, the upper end), adjacent end cap 144, is substantially or completely closed. Influent port 146 may include a portion of the perforated central core tube 130. An effluent port 148 may be located on the case 110, as shown in Fig. 2A, or on an end cap, as shown in Fig. 2B. When the effluent port is located on the case, a plurality of effluent ports, such as ports 148a, 148b, 148c, may be spaced along the length of the case. When the effluent port is located on an end cap, as shown in Fig. 2B, it should be in fluid communication with the interior surface of the case 110, *e.g.,* via a perforated tube 149 extending into the case 110. The case 110 may be adapted to provide a recess for the perforated tube 149, such that it does not interfere with the substantially cylindrical form of the hollow filaments, e.g., the module, as will be described below.

The plurality of hollow filaments 132 may be individual filaments, filaments arranged in tows or bundles, or filaments provided in a "tube sheet," wherein multiple substantially parallel filaments are imbedded in a sheet that can be folded or rolled up to provide MBfR filaments in layers of a desired density. The potted ends of the filaments may be machined to ensure that the filaments are open and available to conduct gas. In some embodiments, the potted hollow filaments can be removed as modular unit (*i.e.*, "module") from the case 110 for cleaning or replacement.

Gas enters the lumens of potted hollow filaments via a gas port 113 located on end cap 144 of case 110, while inerts (*i.e.*, inert materials) drain or discharge from the lumens of the hollow filaments via a drain port 114 disposed on or adjacent end cap 145. Inert materials include excess gas and particulate matter present in the gas supply, liquid and solutes that diffuse from the exterior surface of the filaments into the lumen of the filaments, dust, microorganisms, and other material that accumulates in the lumen of the filaments.

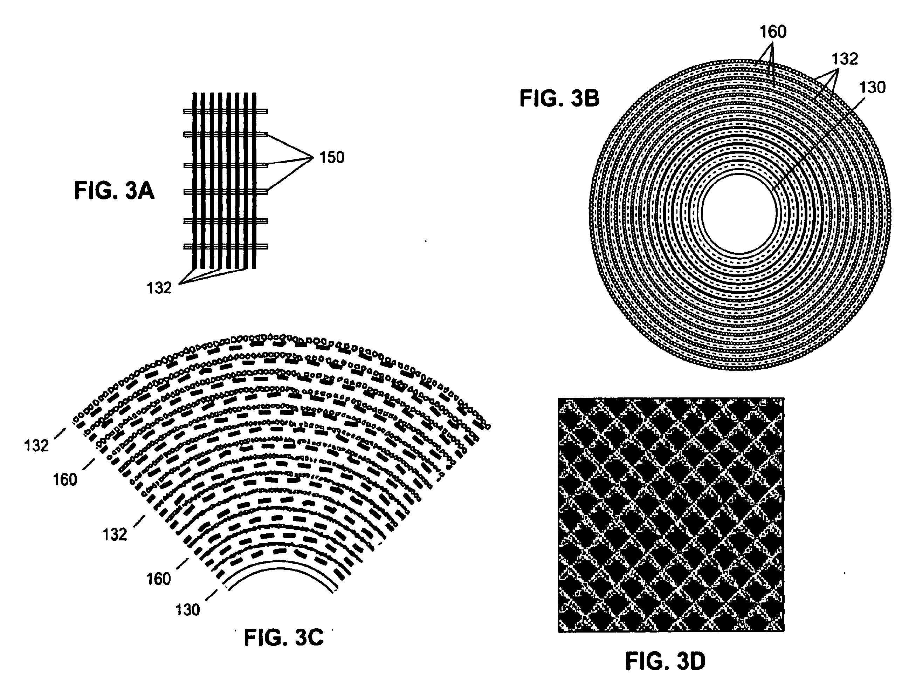

As illustrated in Fig. 3A, the plurality of hollow filaments 132 may be combined with one or more warp fibers 150. Warp fibers are substantially inert, structural fibers or filaments that are typically, but not necessarily, orientated perpendicular to the hollow filaments. Warp fibers preferably have some elasticity to allow the filaments to flex and expand, although the amount is not critical. The warp fibers may be spaced at intervals of from about one to about six centimeters along the length of the hollow filaments. The tension of the warp fibers is sufficient to maintain the position of the groups of hollow filaments, minimizing the deflections and movement of the filaments under operating conditions; however, the filaments may be able to flex and expand. The filaments may be arranged into groups and then combined with warp fibers. Each group may include from 2 to about 200 filaments.

As shown in Figs. 3B-3D, an interleaf material 160 may be used to separate individual hollow filaments 132 or groups or layers of hollow filaments. Similar to warp fibers, the interleaf material maintains grouping and separation of the filaments to minimize flow restriction and fouling, thereby reducing the pressure drop across the MBfR device. Layers of interleaf material 160 may alternate with layers of hollow filaments or with layers of hollow filaments combined with warp fibers (e.g., a fabric), to establish and maintain spacing among the hollow filaments. An exemplary interleaf material is a plastic open mesh material, as shown in Fig. 3D.

As noted, warp fibers and interleaf material may be combined in a single MBfR device. In a preferred device, a plurality of hollow filaments connected by warp fibers form a fabric, that is wound about a central tube to form spiral windings or layers of fabric. The spiral layers of the fabric are separated by an interleaf or spacing material, as illustrated in Figs. 3B-3C.

B. Operation

In operation, contaminated influent water enters the radial flow MBfR device via the influent port and then flows in an outward, radial direction, i.e., from the perforated core tube toward the inside surface of the case. The influent water contacts the exterior surfaces of the hollow filaments upon which a biomass (not shown) is formed. One or more organisms present in the biomass affect the removal of contaminants present in the influent water, thereby producing effluent water having reduced levels of contaminants.

The effluent water collects at or near the interior surface of the case, where the pressure of influent water forces the effluent water out through one or more discharge ports. Any amount of the effluent water may be discharged from the system as product effluent or cycled back through the MBfR device, *e.g.*, for further exposure to the filaments and biomass.

Gas is fed into the lumen of the hollow filaments via a gas port and inerts are collected from the other ends of the filaments for discharge via a drain port. The majority of gas diffuses through the walls of the hollow filaments for utilization by the biomass growing on the exterior surface of the filaments. The gas may be hydrogen, oxygen, or carbon dioxide, depending on the organism(s) present and metabolic steps performed.

The device may further include one of more scouring gas inlet ports, such as port 115 shown in Fig. 2A, for introducing gas for scouring the exterior surfaces of the hollow filaments. The scouring gas inlet port may be located in a bottom region of the case or bottom end cap, such that gas from the port scours the inside surface of the case and the exterior surfaces of the filaments. Scouring gas may be introduced during normal operation or during backwashing, as described, below. An additional scouring gas inlet port (not shown) may be located in or near the influent port, for intruding gas to scour the exterior surfaces of the hollow filaments via radial gas flow. An exemplary scouring gas is nitrogen, although other gases are likely to produce satisfactory results. Since scouring typically involves the release of gas into the atmosphere, the use of flammable or toxic gases is less desirable. The introduction of scouring gas may be referred to as a scouring cycle. The MBfR device may further include any number of additional ports for intruding gas or liquid reagents.

C. Testing

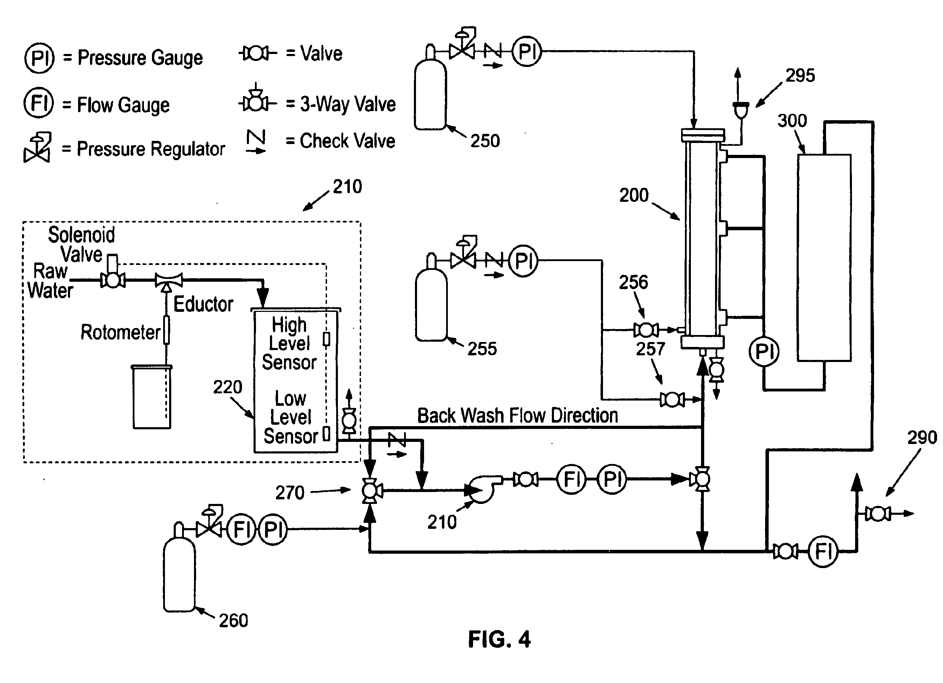

A diagram of a test system for evaluating the performance of the radial flow MBFR device is shown in Fig. 4. The system includes a radial flow MBfR 200, a recirculation pump 210 in an automatic-feed make-up configuration with a leed tank 220. A hydrogen delivery system 250, a nitrogen delivery system 255, and a carbon dioxide delivery system 260 are indicated. An effluent discharge line with sample port 290 allows samples to be taken for analysis. Water to be decontaminated is pumped into the perforated core tube (see Figure 2A) in the MBfR device 200, from which it flows radially over the hollow filaments, collects in the case, and is discharged through one or more effluent discharge ports.

Two three-way valves 270 are positioned in the system to redirect water flow into the effluent discharge ports for reversing the direction of flow. In the reverse flow direction, water flows from the effluent discharge port, scouring the exterior surfaces of the hollow filaments, and collecting in the perforated core tube, thereby back-washing the hollow filaments. Back washing is typically performed once to six times a day to reduce back pressure (pressure drop) through the MBfR device. Following back-washing, the pressure drop across the MBfR device returns to a nominal 1-2 psig.

The test system was equipped with a nitrogen delivery system 255 and several (*e.g.*, four) nitrogen inlet/injection ports 256, 257. Nitrogen inlet/injection ports 255 positioned around the bottom circumference of the MBfR device 200 were for scouring the case and the exterior surface of the hollow filaments, thereby reducing the amount of biomass and the pressure drop across the MBfR device 200. A nitrogen injection port 257 located on the inlet line feeding the perforated core tube of the MBfR 200, was for further scouring the filaments by radially injecting nitrogen gas. Gas scouring is performed at a frequency sufficient to avoid the excessive build up of a biomass, which produces a pressure drop across the MBfR device. The test system is equipped with a gas separation vent valve 295 to vent the nitrogen used for scouring as well as to vent nitrogen produced from reduction of nitrate. Other inert gases, or even air, can be used for scouring.

The test system was further equipped with a carbon dioxide delivery system 260 and carbon dioxide injection port (not shown). Carbon dioxide may be injected to modulate (*i.e.*, lower) the pH inside the MBfR 200 or to provide a carbon source for autotrophic microorganisms. For example, as shown in Equation 1. the autotrophic reduction of nitrate produces hydroxide (OH). Carbon dioxide can react with hydroxide to produce bicarbonate. The amount of carbon dioxide added is typically a function of the amount of nitrate reduced, while maintaining the pH inside the MBfR at about 7-8.

$$2.5\ H_2 + NO_3^- \rightarrow 0.5\ N_2 + 2\ H_2O + {}^-OH \qquad\qquad (1)$$

D. Results

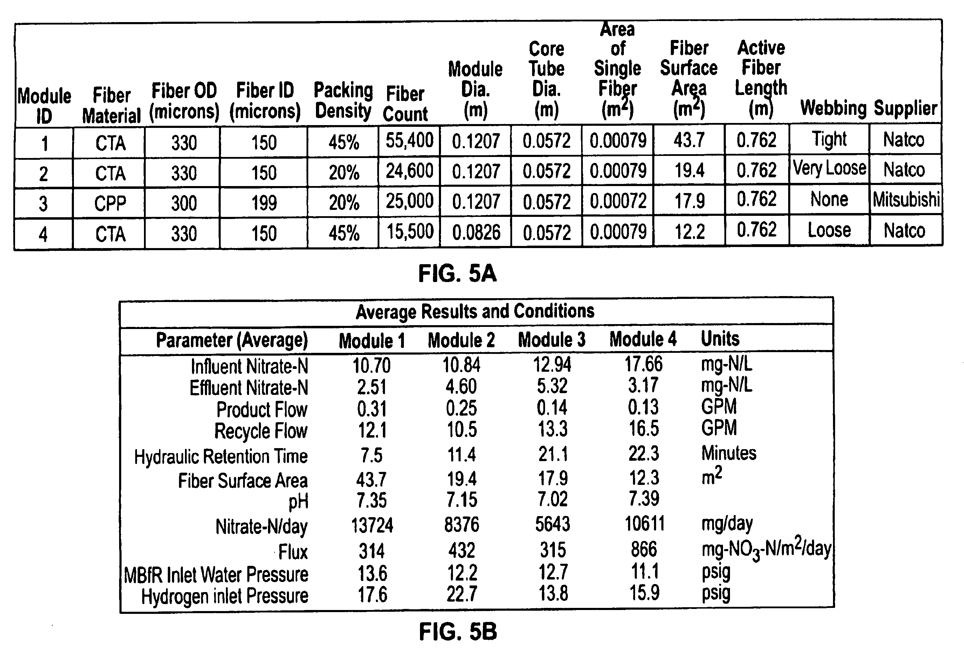

To test the efficacy of the radial flow MBfR device design, four radial flow devices were prepared using different hollow filament materials and configurations. Three of the "modules" used cellulose triacetate (CTA) filaments and one used composite polyethylene /polyurethane filaments (CPP). In addition to different hollow filaments, the exemplary devices used different warp fibers to support the hollow filaments. The specifications of each of the four modules (Module 1-4) are shown in the Table in Fig. 5A.

1. Module 1

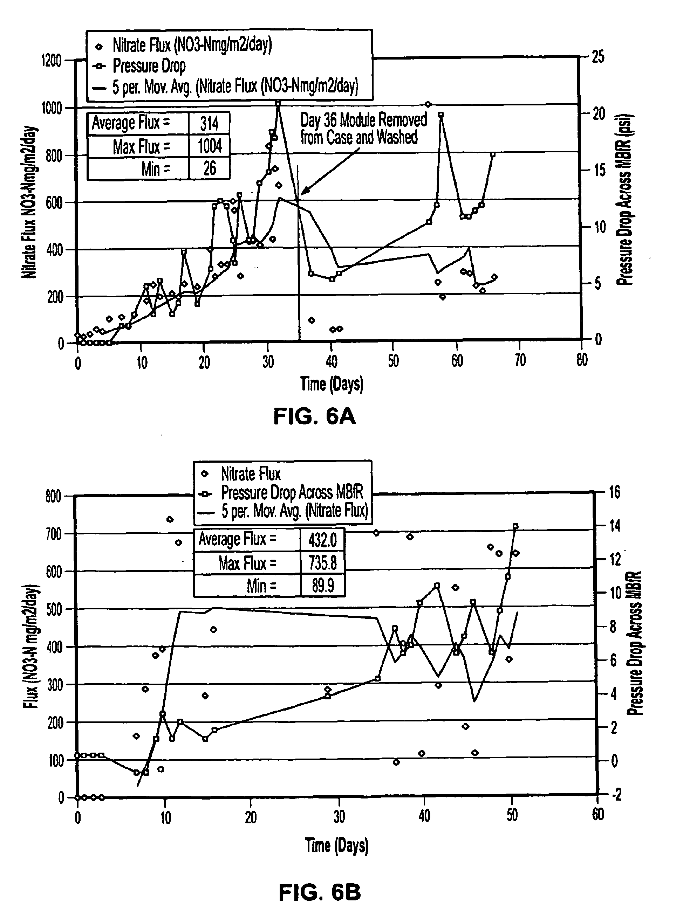

Module 1 used a CTA fiber at a packing density of 45% and a surface area of 43.7 $m^2$ (Fig. 5A). A tight filament bundle was produced by the high number of tightly interwoven warp fibers. An MBfR device containing Module 1 was operated for 63 days, with daily backwashing and without nitrogen scouring. Nitrate flux ($NO_3$-N mg/$m^2$/day) and pressure drop (psi) data are plotted in Fig. 6A. The nitrate flux and pressure drop increased for the first thirty days. The nitrate flux reached a maximum value of 1,004 ($NO_3$-N mg/$m^2$/day) but failed to achieved a steady state value. A post mortem demonstrated that the pressure drop was due to biomass formation, which was distributed unevenly throughout the module. The light tan color that characterized the biomass was seen on the outside of the module, with a reduced amount in the area around the discharge ports.

Module 1 had a total of 27 wraps/layers of filament. Unrolling the module revealed a heavy biomass between layers 4-17, concentrated at about layer 8 (counting from the outside layers). The back wash procedure appeared to maintained control of the biomass on the outside layers of the module but not in the internal layers, which became plugged with biomass.

2. <u>Module 2</u>

Module 2 used CTA filaments at a lower packing density (i.e.. 20%) with a correspondingly lower surface area of 19.4 m$^2$ (Fig. 5A). Module 2 was operated for 51 days, with daily backwashing but without nitrogen scoured. The nitrate flux appeared to achieve a steady state level of about 490 $NO_3$-N mg/m$^2$/day after twenty days and then declined slightly until the module was taken out of operation (Fig. 6B). The average nitrate flux was 432 ($NO_3$-N mg/m$^2$/day). The pressure increased steadily over the time but not to the extent observed with Module 1.

A post mortem of Module 2 after it was removed from the case revealed that the biomass was not uniformly distributed. As was the case with Module 1, the biomass at the center of the fiber bundle was more dense than at the surface.

3. <u>Module 3</u>

Module 3 used CPP filaments at a packing density of 20% and had a surface area of 17.9 m$^2$ (Fig. 5A). The CPP filaments had a slightly smaller diameter (300 microns) than the CTA filaments used in Modules 1, 2 and 4 (330 microns). Module 3 had no warp fiber and the hollow fibers were very loose. As above, the module was backwashed daily but was not nitrogen scoured.

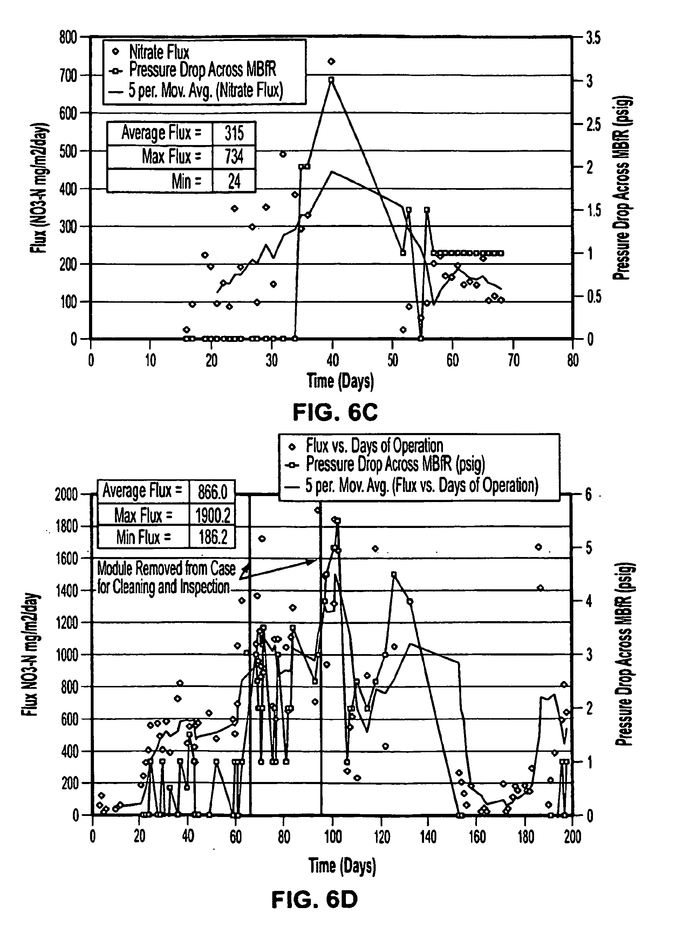

The pressure drop across Module 3 had a different pattern than observed with Modules 1 and 2. In particular, the pressure drop was nominal for the first 30 days of operation, and then increased rapidly to 3 psi, and decreased to 1 psi (Fig. 6C). Nitrate flux decreased with the pressure increase and continued to decrease even while the pressure remained constant, peaking at 500 $NO_3$-N mg/m$^2$/day after 30 days of operation, and averaging 315 ($NO_3$-N mg/m$^2$/day). Channeling of the water within the module was visible through the case, in some case resulting in the flow of water directly from the core tube to the discharge. Extensive back washing and nitrogen injection into the case did not reduce the channeling. Module 3 was operated for 68 days before it was removed from service.

4. <u>Module 4</u>

Module 4 used the same CTA filaments used in Modules 1 and 2. The packing of the warp fibers in Module 4 was intermediate between that of Modules 1 and 2 (Fig. 5A). The purpose of loosening the warp fiber in Module 4 was to provide space for the biomass to grow on the outside of the hollow fiber, while the warp fibers provided sufficient tension to ensure uniform flow distribution and avoid channeling. The fiber packing density was 45% with a surface area of only 12.3 m$^2$, due to a reduced overall module diameter. The purpose of the reduced module diameter was to allow complete cleaning of the biomass from the fibers. Module 4 was back washed twice a day for 10 minutes during operation. In addition nitrogen was sparged into the case and core tube as needed to wash the filaments.

The nitrate flux in Module 4 leveled off after 80 days, although it did not appear to reach a steady state (Fig. 6D). The pressure drop across Module 4 stabilized at 2 psi after 60 days of operation, and then increased to 5 psi. Module 4 was removed from the case on Day 104, washed with water, and then returned to operation. The nitrate flux returned to 800 $NO_3$-Nmg/m$^2$/day within 8 days and continued to increase, accompanied by a pressure drop, presumably due to an accumulation of biomass between the filaments and the case, which was more profound than prior to disassembly and cleaning. Nitrogen scouring failed to remove the accumulated biomass. On Day 153. Module 4 was again removed from the case and washed, at which time several filaments were inadvertently broken, resulting in the leakage of hydrogen into the case and terminating the study of Module 4. The average nitrate flux for Module 4 was 866 ($NO_3$-N mg/m$^2$/day) for the entire time it was operated.

The performance of Module 4 was better than that of Modules 1, 2 and 3 in terms of nitrate flux, pressure drop, and total time of time of operation (despite the damage to the filaments). The average flux over the 202 days that Module 4 operated was 866 mg $NO_3$-N/m$^2$/day, which is twice that of the other modules tested. A summary of the average operating conditions of Modules 1-4 is shown in the Table in Fig. 5B.

E. <u>Conclusions</u>

These results demonstrate that a radial flow MBfR can achieve a higher nitrate flux with a lower pressure drop and than other MBfR reactors reported. Important aspects of the design of radial flow MBfR devices include (i) the thickness of the filament bundle and (ii) the tension of the warp fibers. Although packing density is also important, Module 2, which had a 20% packing density, demonstrated only a slight improvement in nitrate flux over Module 1, which had a packing density of 45%. The importance of warp fibers is clearly demonstrated by the channeling observed using Module 3.

Generally the pH in the MBfR device should be maintained in the range of 8 to 9 to support the biofilm. This pH range is readily obtained via carbon dioxide addition to the MBfR. All MBfR tested require periodic cleaning procedures to reduce the amount of accumulated biofilm. Best results were obtained using a combination of backwashing, nitrogen gas sparging, and occasional disassembly and cleaning.

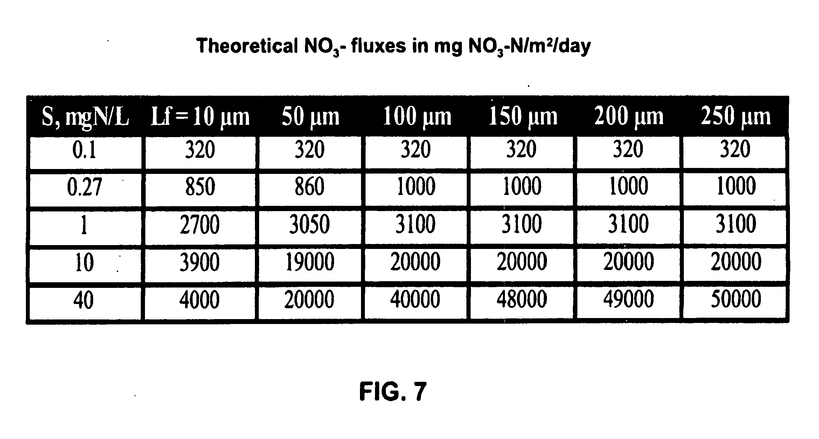

Turning to the issue of efficiency, the Table shown in Figure 7 shows the theoretical nitrate flux for a non-steady-state biofilm as a function of nitrate concentration in the bulk liquid (S in mg-N/L) and biofilm thickness (Lf in $\mu$m). For low nitrate concentrations (*i.e.,* <0.2 mg·N/L), the theoretical nitrate flux is 850 to 1,000 mg-N/m$^2$/day (assumes there is no limit to hydrogen availability). As shown in Fig. 6D, Module 4, with an internal core tube design, achieved the theoretical limit of flux for a low nitrate concentration MBfR during much of its operation, demonstrating the efficiency of radial flow MBfR devices.

Further experiments using radial flow MBfR demonstrated that improved contaminant removal could be achieved by recycling a portion (*e.g.*, 40-50%) of the MBfR effluent back into the MBfR influent port. One explanation of this result is simply that a portion of the water is twice-exposed to the biofilm, allowing the biofilm to remove more contaminants from the final effluent. However, another theory is that the mixture or "treated water" with "untreated water" dilutes the total amount of dissolved oxygen in the influent water, encouraging the biofilm to use nitrate, rather than oxygen, as an electron acceptor. Other methods for diluting or removing oxygen from influent water are expected to produce similar results.

Without being limited to a theory, it is believed that the radial flow design improves the rate and uniformity of influent flow over biofilm-coated hollow filaments, increasing the efficiency of contaminant removal, minimizing bio fouling, and improving the efficiency of periodic scouring. Several MBfR designs were empirically tested and the results demonstrated that the radial flow MBfR device was superior to conventional MBfR using other flow configurations.

### III. Materials for use in hollow filaments, warp fibers, and interleaf materials

#### A. Hollow filaments

The hollow filaments used in the exemplary device were made from cellulose triacetate (CTA) having an outside diameter of about 300 $\mu$m and an inside diameter of about 150 $\mu$m. However, other materials, including a polyester, polyethylene, polypropylene, polyurethane, or polyvinyl chloride, can be used in the radial flow device.

One class of compounds useful for the production of hollow filaments for use in MBfR devices is the polyesters. Esters are a class of organic compounds traditionally formed by the condensation of an alcohol and an organic acid. Where the acid is a carboxylic acid, the resulting ester has the structure R1-C(=O)OR2, where R1 and R2 are independently H or myriad functional groups. Esters can also be formed from phosphoric, sulfuric, nitric, boric, benzoic, and other acids. Cyclic esters are known as lactones.

Esters participate in hydrogen bonding as hydrogen-bond acceptors. However, esters do not function as hydrogen donors. This allows esters groups to form hydrogen bonds with many other functional groups, while precluding hydrogen-bonding between esters groups. Esters are generally hydrophobic, although the nature of the R1 and R2-groups affects the characteristics of a particular ester.

Polyester is a polymer of one or more preselected ester monomers, typically produced by azeotrope esterification, alcoholic transesterification, acyiation (*i.e.*. the HCl method), the silyl or silyl acetate method, or the ring-opening method, and variations, thereof, depending on the particular polyester. Polyester is widely used in the manufacture of consumer products, and its mechanical properties are well known.

Polyesters include but are not limited to poly(ethylene terephthalate) (PET), poly(trimethylene tereptrthalate) (PTT), poly(butylene terephthalate) (PBT), poly(ethylene naphthalate) (PEN), poly(cyclohexylene dimethylene terephthalate) (PCTA), polycarbonate (PC), poly(butylene naphthalate) (PBN), and poly(lactic acid) (PLA). Polyesters may be homopolymer or heteropolymers. As used herein, heteropolymers include copolymers. A common polyester co-polymers is 1,4-cyclohexanedimethanol (CHDM). For example, PCTA is a copolymer of three monomers, which are terephthalic acid, isophthalic acid, and CHDM. While some industries use the terms "polyester" and "PET" almost interchangeably, the term "polyester" refers to the entire class of compounds.

Many of the advantages of polyester are most apparent when fibers are tossed or woven into tows, ropes, fabrics, etc. For example, polyester is widely used in the textile industry. The most widely used polyester is PET (or PETE), which exists in amorphous (transparent) and semi-crystalline (white or opaque) forms and is readily made into fibers and sheets. PET and another polyester of a dihydric alcohol and terephthalic acid are commonly used to make rope.

In addition to being inexpensive to produce, polyesters are particularly strong, resilient, resistant to abrasion, and resistant to stretching and shrinking. Polyester textiles are wrinkle resistant, mildew resistant, fast drying, and retain heat-set pleats and creases. Polyester displays excellent resistance to oxidizing agents, cleaning solvents, and surfactants. While resistant to sunlight, UV stabilizers are typically added for use outdoors or exposed to UV light.

Polyesters, like most thermoplastics, are recyclable and may be may be virgin polyesters, recycled polyesters, post consumer polyesters, recycled monomers, or combinations and variation, thereof. Some polyesters, including PET, offer the additional advantage of containing only carbon, oxygen, and hydrogen (*i.e.*, no sulfur, phosphorus, nitrogen, etc.), which makes them candidates for incineration.

Exemplary polyester hollow filaments are made of melt-spinnable polyester, such as PET, that is melted and pressed through a hole of a spinneret, quenched in water or in an air stream, stretched in one or more steps in combination with heating, and then wound onto on a spool using a winding machine. The hollow filaments are fine, effectively "endless" flexible hollow polyester tubes, which can be cut to any length as needed. The filaments having an exterior surface that is typically exposed to the wastewater, and an interior surface for interacting with sparged gas. The interior surface defines a hollow interior space.

The preferred diameter of the hollow filaments for use in the radial flow MBfR depends on the particular embodiment. The hollow filaments may be less than 500 $\mu$m in diameter, or even less than 100 $\mu$m in diameter. The filaments, may even be less than 50 $\mu$m, less than 20 $\mu$m, or even less that 10 $\mu$m in diameter. The hollow filaments may have a uniform diameter or be heterogenous with respect to diameter. Where the filaments are of heterogenous diameter, the diameter may fall within a preselected range.

The hollow filaments may be tossed into bundles to form multifilament yarns, which are then assembled into modules for use in a bioreactor, to be described. Filaments of less than 10 dtex (*i.e.*, decitex = 1 gram per 10,000 meters) are preferred for yarns, while filaments of more than 100 dtex are typically used as monofilaments. Intermediate filaments are used in either form. Both mono and multifilaments can be used as warp or weft in technical fabrics.

The diffusion of gas through a polymer membrane is generally described by Fick's laws of diffusion. The solubility coefficient depends on the particular polymer-gas combination and Henry's law. The permeation of low molecular weight gases in rubbery polymers (below their glass transition temperatures) at moderate pressures is Fickian and follows Henry's law for different sorption modes (*i.e.* absorption, the adsorption, plus trapping in microvoids, clustering, and aggregation). Klopffer, M.H. and Flaconnèche, B., Oil & Gas Science and Technology- Rev. IFP, 56, 2001, No. 3).

The burst pressure of a hollow filament can be calculated using Equation 2:

$$P = T \cdot (OD^2 - ID^2)/(OD^2 + ID^2)$$

$$(2)$$

where P is burst pressure, T is tenacity, and OD and ID are outside and inside diameter, respectively. OD and ID are preselected variables and tenacity is a constant associate with a particular polymer.

Preferred filament diameters for use as described are from about 50 $\mu$m to about 5,000 $\mu$m (OD), or even from about 0.10 mm to about 3,000 $\mu$m. One preferred diameter is about 300 $\mu$m. The optimal shape of hollow filaments is round, although irregular shaper are expected to produce satisfactory results. Consistent density is preferred but not required. Preferred tenacity (T) values are from about 10 to about 80 cN/tex, or even from about 20 to about 60 cN/tex.

Percent void volume (%V) may be calculated using Equation 3:

$$\%V = T \cdot (\text{inside area})/(\text{outside area}) \times 100 \qquad (3)$$

An acceptable range for void volume is from about 1% to about 99%, while a preferred range for some embodiments is from about 25% to about 50%.

B. Warp fibers and interleaf materials

Warp fibers and interleaf materials can be made of cellulose triacetate, polyester, polypropylene, polyethylene, polyurethane, and composites, thereof. The warp fiber should have an outside diameter of about 100-500 $\mu$m, about 150-450 $\mu$m, or about about 200-400 $\mu$m. In one example, the warp fiber is 150 denier textured polyester having an outside diameter of about 300 $\mu$m and an inside diameter of about 150 $\mu$m. Other dimensions and a range of from about 75 to about 300 denier texture polyester should produce similar results.

Similarly, interleaf material may be made of an inert plastic material such as cellulose triacetate, polyester, composites of polyethylene and polyurethane, etc polyethylene or polypropylene. Interleaf material should be sufficiently porous to permit radial flow in an MBfR without significant restriction. Interleaf material may be made from woven fibers, perforated sheets, or expanded materials. Exemplary interleaf material is an extruded polypropylene diamond net, as shown in Fig. 3D. A particular net has a nominal hole size of 0.110 inches x 0.110 inches, a thickness of 0.046 inches, and a nominal open percentage of 66%.

IV. Selection of microorganisms

The MBfR device has been exemplified for nitrate reduction using autotrophic bacteria and a hydrogen gas as an electron donor as previously described. However, it will be apparent from the disclosure that the device can be used with many types of contaminants and suitable microorganisms. Oxidized contaminants include but are not limited to nitrate, nitrite, perchlorate, chlorate, bromate, and a range of halongenated organic contaminants, etc.

Removal of nitrogenous contaminants is usually performed by denitrifying bacteria or "nitrifers", which include two major groups of aerobic, chemolithoautotrophic bacteria. Ammonia-oxidizing bacteria oxidize ammonia to nitrite, and nitrite-oxidizing bacteria (NOB) oxidize nitrite to nitrate. The first process is performed by a number of facultative anaerobes commonly found in soil. The second process, sometimes referred to as "true" denitrification, is performed by a more select group of bacteria exemplified by *Paracoccus denitrificans, Alcaligenes eutrophus, Alcaligenes paradoxus. Pseudomonas pseudoflava, Vibrio dechloraticans* Cuznesove B-1168, *Acinetobacter thermotoleranticus, Ideonella dechloratans,* GR-1 (a strain identified to belong to the β-Proteobacteria, *Paracoccus denitrificans, Wolinella succinogenes,* and *Ralstonia eutropha. Pseudomonas pseudoflava, Alcaligenes eutrophus, Alcaligenes paradoxus, Paracoccus denitrificans,* and *Ralstonia eutropha* can all use hydrogen gas as an electron donor. *Ralstonia eutropha* is a preferred bacteria available from the American Type Culture Collection (ATCC; Manassas, VA, USA) as collection number 17697.

Perchlorate-reducing bacteria are generally facultative anaerobes or microaerobes. The bacteria use acetate, propionate, isobutyrate, butyrate, valerate, malate, fumerate, lactate, chlorate, and oxygen as electron donors but typically not methanol, catechol, glycerol, citrate, glucose, hydrogen, sulfate, selenate, fumerate, malate, Mn(IV), or Fe(III). Most perchlorate-reducing bacteria are Proteobacteria. *Dechloromonas, Dechlorosoma,* and strain GR-1 are β-Proteobactaria, while *Azospirillum* is an α-Proteobacteria. Strains of *Dechloromonas* and *Dechlorosoma* can use lactate as an electron donor, and strains of *Dechlorosoma* can use ethanol as an electron donor. With the exception of three *Dechloromonas* strains, all perchlorate-reducing bacteria can use nitrate as an electron acceptor. Some autotrophic *Dechloromonas* strain use hydrogen as an electron donor. Such strains are particularly useful for use with the present apparatus, systems and methods.

Hydrogen-oxidizing bacteria include both hydrogen-oxidizing, autotrophic bacteria and bacteria able to utilize organic carbon and other energy sources in addition to hydrogen. Hydrogen-oxidizing bacteria are preferred in some embodiments of the present apparatus, systems, and methods. In the presence of oxidized contaminants, such bacteria reduce an oxidized form of a primary electron acceptor in a sufficient amount to sustain a viable, steady-state biomass within the aqueous water-treatment system. Deriving energy for growth via reduction is referred to as a dissimilatory reduction. Examples of hydrogen-oxidizing bacteria include but are not limited to *Pseudomonas pseudoflava, Alcaligenes eutrophus, Alcaligenes paradoxus. Para coccus denitrificans,* and *Ralstonia eutropha,* which can all used nitrate, and a *Dechloromonas* strain, which can use perchlorate.

One or more (*i.e.*. combinations) of the above-identified bacteria can be inoculated into a radial flow MBfR and allowed to form a biofilm on the outside of the hollow filaments. Bacteria that require similar growth conditions (*e.g.*, sparging with the same gas) may be grown in the same biofilm, while bacteria with different growth requirements are typically grown in different bioreactors.

Alternatively or additionally, endogenous bacteria in waste water are allowed to form a biofilm in a reactor. This method has the advantage that the bacteria present in the waste water are already adapted to the available nutrients and; therefore, are already capable of metabolizing oxidized contaminant in the waste water.

V. Methods for Water Treatment

An exemplary use for the present radial flow MBIR is for water treatment. MBfR devices can be used in combination with other water treatment process, so long as chemicals present in the water (*e.g.*, chlorine) do not interfere with the formation and maintenance of the biofilm in the MBfR or the metabolic activity of the microorganisms in the biofilm. MBfR can be used to remove a variety of water-borne contaminants, some of which are identified, above.

These and other applications and implementations will be apparent in view of the disclosure.

**Claims**

1.  A membrane biofilm reactor (MBfR) device (100), comprising:

    a central core tube (130) having a wall defining a lumen and one or more perforations in the wall defining a perforated region (117), the core tube further having a first open end (146) and a second substantially closed end; a plurality of hollow filaments (132), each filament having a wall that defines an inner lumen, an exterior surface, a first end, and a second end; and

a case (110) having a cavity, a first end cap (145), a second end cap (144), and at least one effluent port (148), which is in communication with the exterior surfaces of said hollow filaments (132);

wherein the first open end (146) of the core tube (130) is sealed in the first end cap (145), with the perforated region extending into the central cavity of the case (110), and said first open end (146) of the core tube (130) has a fitting for attachment to a source of influent liquid,

and wherein the device further comprises at least one scouring gas inlet port (115), which is in communication with the exterior surfaces of said hollow filaments (132),

and wherein the first ends of the plurality of hollow filaments (132) are open and sealed in the first end cap (145), and the second ends of the plurality of hollow filaments are open and sealed in the second end cap (144).

2. The device of claim 1, wherein one of said first end cap (145) and said second end cap (144) includes a fitting for attachment to a gas source.

3. The device of claim 2, further having a drain (114) port in the case, for communication with the lumens of the plurality of hollow filaments (132).

4. The device of claim 3, wherein the drain port (114) is positioned at an end of the case (110) opposite from the fitting for attachment to a gas source.

5. The device of any preceding claim, wherein the first end cap (145) and second end cap (144) are sealed in the case.

6. The device of any one of claims 1-4, wherein the hollow filaments are combined with a warp fiber to form a fabric.

7. The device of claim 6, wherein the hollow filaments (132) are separated by an interleaf material (180).

8. The device of claim 7, oriented vertically with the first end cap (145) below the second end cap (144), the first end cap adapted for ingress of the influent liquid and the second end cap adapted for ingress of the gas.

9. The device of claim 1, wherein the hollow filaments are made of a material selected from poly(trimethylene terephthalate), polypropylene, and polyvinylchloride.

10. The device of claim 1, wherein the at least one scouring gas inlet port (115) is located in a bottom region of the case (110) or is located in the influent port.

11. The device of claim 10, comprising a plurality of scouring gas inlet ports (115) located in a bottom region of the case.

12. A system comprising a plurality of devices of any one of claims 1-11, said devices arranged in parallel or series.

13. A method for reducing fouling of a membrane biofilm device (100) by a biomass, comprising:

providing a device having a central core tube (130) with a wall defining a lumen and one or more perforations in the wall, a plurality of hollow filaments (132) surrounding the core tube (130), each filament having a wall defining an inner lumen and an external surface, and a case (110) housing the central core tube (130) and the plurality of hollow filaments (132),

introducing a liquid influent into the central core tube (130),

introducing a gas into the inner lumens of the plurality of hollow filaments (132), said gas supporting growth of a biomass on the external surfaces of the hollow filaments,

permitting the liquid influent to flow through said one or more perforations to contact the biomass on the external surfaces of the filaments (132), said flow of liquid influent defining a radial flow path in the device,

collecting the effluent water at one or more effluent ports (148) disposed on said case,

wherein the radial flow path of the influent liquid reduces fouling of the device by the biomass.

14. The method of claim 13, further comprising recirculating a first portion of the effluent through the device.

15. The method of claim 13, wherein said introducing a liquid comprises introducing liquid effluent into the central core tube (130) at a first end of the device, and said introducing a gas comprises introducing gas at a second end of the device.

**16.** The method of claim 13, further comprising introducing a scouring gas into the core tube (130) of the device or into a bottom region of the case (110).

**17.** The method of claim 14 or 16, further comprising backwashing by introducing a liquid into the one or more effluent ports (148) for a periodic backwash cycle.

**Patentansprüche**

**1.** Membran-Biofilmreaktor(MBfR)vorrichtung (100) mit:

einem mittigen Kernrohr (130) mit einer ein Lumen definierenden Wand und einer oder mehreren Löchern in der Wand, die einen perforierten Bereich (117) definieren, wobei das Kernrohr ferner ein erstes offenes Ende (146) und ein zweites, im Wesentlichen geschlossenes Ende aufweist;

mehreren Hohlfasern (132), wobei jede Faser eine ein Innenlumen definierende Wand, eine Außenfläche, ein erstes Ende und ein zweites Ende aufweist; und

einem Gehäuse (110) mit einem Hohlraum, einer ersten Endkappe (145), einer zweiten Endkappe (144) und mindestens einem mit den Außenflächen der Hohlfasern (132) kommunizierenden Auslassport (148),

wobei das erste offene Ende (146) des Kernrohrs (130) in der ersten Endkappe (145) versiegelt aufgenommen ist, wobei sich der perforierte Bereich in den mittigen Hohlraum des Gehäuses (110) erstreckt und das erste offene Ende (146) des Kernrohrs (130) ein Anschlussstück für eine Befestigung an einer Beschickungsflüssigkeitsquelle aufweist, und

wobei die Vorrichtung ferner mindestens einen mit den Außenflächen der Hohlfasern (132) kommunizierenden Spülgaseinlassport (115) aufweist, und

wobei die ersten Enden der mehreren Hohlfasern (132) offen und in der ersten Endkappe (145) versiegelt aufgenommen sind und die zweiten Enden der mehreren Hohlfasern offen und in der zweiten Endkappe (144) versiegelt aufgenommen sind.

**2.** Vorrichtung nach Anspruch 1, wobei die erste Endkappe (145) oder die zweite Endkappe (144) ein Anschlussstück für eine Befestigung an einer Gasquelle aufweist.

**3.** Vorrichtung nach Anspruch 2, ferner mit einem im Gehäuse ausgebildeten, mit den Lumina der mehreren Hohlfasern (132) kommunizierenden Abflussport (114).

**4.** Vorrichtung nach Anspruch 3, wobei der Abflussport (114) an einem dem Anschlussstück für eine Befestigung an einer Gasquelle gegenüberliegenden Ende des Gehäuses (110) angeordnet ist.

**5.** Vorrichtung nach einem der vorangehenden Ansprüche, wobei die erste Endkappe (145) und die zweite Endkappe (144) im Gehäuse versiegelt aufgenommen sind.

**6.** Vorrichtung nach einem der Ansprüche 1 bis 4, wobei die Hohlfasern mit einem Kettfaden kombiniert sind, um ein Gewebe zu bilden.

**7.** Vorrichtung nach Anspruch 6, wobei die Hohlfasern (132) durch ein Zwischenmaterial (180) getrennt sind.

**8.** Vorrichtung nach Anspruch 7, wobei die Vorrichtung derart vertikal ausgerichtet ist, dass die erste Endkappe (145) unterhalb der zweiten Endkappe (144) angeordnet ist, wobei die erste Endkappe zum Zuführen der Beschickungsflüssigkeit und die zweite Endkappe zum Zuführen des Gases geeignet ist.

**9.** Vorrichtung nach Anspruch 1, wobei die Hohlfasern aus einem Material hergestellt sind, das aus Poly(trimethylenterephthalat), Polypropylen und Polyvinylchlorid ausgewählt ist.

**10.** Vorrichtung nach Anspruch 1, wobei der mindestens eine Spülgaseinlassport (115) in einem unteren Bereich des Gehäuses (110) oder in dem Beschickungsflüssigkeitsport angeordnet ist.

**11.** Vorrichtung nach Anspruch 10, mit mehreren Spülgaseinlassports (115), die in einem unteren Bereich des Gehäuses angeordnet sind.

**12.** System mit mehreren Vorrichtungen nach einem der Ansprüche 1 bis 11, wobei die Vorrichtungen parallel oder in Reihe angeordnet sind.

**13.** Verfahren zum Vermindern des Faulens einer Membran-Biofilmvorrichtung (100) durch Biomasse, mit den Schritten:

Bereitstellen einer Vorrichtung mit einem mittigen Kernrohr (130) mit einer ein Lumen definierenden Wand und einer oder mehreren Löchern in der Wand, mehreren das Kernrohr (130) umgebenden Hohlfasern (132), wobei jede Hohlfaser eine ein Innenlumen definierende Wand und eine Außenfläche aufweist, und einem Gehäuse (110), in dem das mittige Kernrohr (130) und die mehreren Hohlfasern (132) aufgenommen sind;
Einleiten einer Beschickungsflüssigkeit in das mittige Kernrohr (130);
Einleiten eines Gases in die Innenlumina der mehreren Hohlfasern (132), wobei das Gas das Wachstum einer Biomasse auf den Außenflächen der Hohlfasern unterstützt;
Ermöglichen, dass die Beschickungsflüssigkeit durch das eine oder die mehreren Löcher hindurch strömt, um mit der Biomasse auf den Außenflächen der Hohlfasern (132) in Kontakt zu kommen, wobei der Flüssigkeitsstrom einen radialen Strömungspfad in der Vorrichtung definiert;
Sammeln der abfließenden Flüssigkeit an einem oder mehreren auf dem Gehäuse angeordneten Abflussports (148),
wobei der radiale Strömungspfad der Flüssigkeit das Faulen der Vorrichtung durch Biomasse vermindert.

**14.** Verfahren nach Anspruch 13, ferner mit dem Schritt zum erneuten Inumlaufbringen eines ersten Teils der abfließenden Flüssigkeit durch die Vorrichtung.

**15.** Verfahren nach Anspruch 13, wobei das Einleiten einer Flüssigkeit das Einleiten einer Beschickungsflüssigkeit in den mittigen Kernrohr (130) an einem ersten Ende der Vorrichtung und das Einleiten eines Gases das Einleiten eines Gases an einem zweiten Ende der Vorrichtung aufweist.

**16.** Verfahren nach Anspruch 13, ferner mit dem Einleiten eines Spülgases in das Kernrohr (130) der Vorrichtung oder in einen unteren Bereich des Gehäuses (110).

**17.** Verfahren nach Anspruch 14 oder 16, ferner mit einem Rückspülschritt durch Einleiten einer Flüssigkeit in den einen oder die mehreren Abflussports (148) für einen periodischen Rückspülzyklus.

**Revendications**

**1.** Dispositif de réacteur à biofilm à membrane (MBfR) (100), comprenant :

un tube central (130) ayant une paroi définissant un lumen et une ou plusieurs perforations dans la paroi définissant une région perforée (117), le tube central ayant en outre une première extrémité ouverte (146) et une seconde extrémité sensiblement fermée;
une pluralité de filaments creux (132), chaque filament ayant une paroi qui définit un lumen intérieur, une surface extérieure, une première extrémité, et une seconde extrémité ; et
un boîtier (110) ayant une cavité, un premier bouchon d'extrémité (145), un second bouchon d'extrémité (144), et au moins une ouverture pour effluent (148), qui est en communication avec les surfaces extérieures desdits filaments creux (132) ;
où la première extrémité ouverte (146) du tube central (130) est étanchéifiée dans le premier bouchon d'extrémité (145), avec la région perforée s'étendant jusque dans la cavité centrale du boîtier (110), et ladite première extrémité ouverte (146) du tube central (130) possède un raccord pour l'attachement à une source d'influent liquide,
et où le dispositif comprend en outre au moins une ouverture d'entrée de gaz de décapage (115), qui est en communication avec les surfaces extérieures desdits filaments creux (132),
et où les premières extrémités de la pluralité de filaments creux (132) sont ouvertes et étanchéifiées dans le premier bouchon d'extrémité (145), et les deuxièmes extrémités de la pluralité de filaments creux sont ouvertes et étanchéifiées dans le deuxième bouchon d'extrémité (144).

**2.** Dispositif selon la revendication 1, dans lequel l'un parmi ledit premier bouchon d'extrémité (145) et ledit second bouchon d'extrémité (144) comprend un raccord pour l'attachement à une source de gaz.

**3.** Dispositif selon la revendication 2, ayant en outre une ouverture pour évacuation (114) dans le boîtier, pour une communication avec les lumens de la pluralité de filaments creux (132).

**4.** Dispositif selon la revendication 3, dans lequel l'ouverture pour évacuation (114) est positionné à une extrémité du boîtier (110) à l'opposé du raccord pour l'attachement à une source de gaz.

**5.** Dispositif selon l'une quelconque des revendications précédentes, dans lequel le premier bouchon d'extrémité (145) et le second bouchon d'extrémité (144) sont étanchéifiés dans le boîtier.

**6.** Dispositif selon l'une quelconque des revendications 1 à 4, dans lequel les filaments creux sont combinés avec une fibre de chaîne pour former un tissu.

**7.** Dispositif selon la revendication 6, dans lequel les filaments creux (132) sont séparés par un matériau intercalaire (180).

**8.** Dispositif selon la revendication 7, orienté verticalement avec le premier bouchon d'extrémité (145) en dessous du second bouchon d'extrémité (144), le premier bouchon d'extrémité étant adapté pour la pénétration de l'influent liquide et le second bouchon d'extrémité étant adapté pour la pénétration du gaz.

**9.** Dispositif selon la revendication 1, dans lequel les filaments creux sont faits d'un matériau choisi parmi le poly (triméthylène téréphtalate), le polypropylène et le chlorure de polyvinyle.

**10.** Dispositif selon la revendication 1, dans lequel la au moins une ouverture d'entrée de gaz de décapage (115) est située dans une région de fond du boîtier (110) ou est située dans l'ouverture pour influent.

**11.** Dispositif selon la revendication 10, comprenant une pluralité d'ouvertures d'entrée de gaz de décapage (115) situées dans une région de fond du boîtier.

**12.** Système comprenant une pluralité de dispositifs selon l'une quelconque des revendications 1 à 11, lesdits dispositifs étant agencés en parallèle ou en série.

**13.** Procédé pour réduire l'encrassement d'un dispositif à biofilm à membrane (100) par une biomasse, consistant à :

fournir un dispositif ayant un tube central (130) avec une paroi définissant un lumen et une ou plusieurs perforations dans la paroi, une pluralité de filaments creux (132) entourant le tube central (130), chaque filament ayant une paroi définissant un lumen intérieur et une surface externe, et un boîtier (110) logeant le tube central (130) et la pluralité de filaments creux (132),
introduire un influent liquide dans le tube central (130),
introduire un gaz dans les lumens intérieurs de la pluralité de filaments creux (132), ledit gaz prenant en charge la croissance d'une biomasse sur les surfaces externes des filaments creux,
permettre à l'influent liquide de s'écouler à travers lesdites une ou plusieurs perforations pour entrer en contact avec la biomasse sur les surface externes des filaments (132), ledit écoulement d'influent liquide définissant une voie d'écoulement radial dans le dispositif,
recueillir l'effluent aqueux au niveau d'un ou plusieurs ouvertures pour effluent (148) disposés sur ledit boîtier, où la voie d'écoulement radial de l'influent liquide réduit l'encrassement du dispositif par la biomasse.

**14.** Procédé selon la revendication 13, comprenant en outre la recirculation d'une première partie de l'effluent à travers le dispositif.

**15.** Procédé selon la revendication 13, dans lequel ladite introduction d'un liquide consiste à introduire un effluent liquide dans le tube central (130) à une première extrémité du dispositif, et ladite introduction d'un gaz consiste à introduire un gaz à une seconde extrémité du dispositif.

**16.** Procédé selon la revendication 13, comprenant en outre l'introduction d'un gaz de décapage dans le tube central (130) du dispositif ou dans une région de fond du boîtier (110).

**17.** Procédé selon la revendication 14 ou 16, comprenant en outre le rinçage par l'introduction d'un liquide dans l'un ou plusieurs ouvertures pour effluent (148) pour un cycle de rinçage périodique.

**FIG. 1A**
**PRIOR ART**

**FIG. 1B**
**PRIOR ART**

**FIG. 1C**
**PRIOR ART**

EP 2 328 845 B1

EP 2 328 845 B1

24

26

**FIG. 1D**
**PRIOR ART**

24

56

52

58

54

60

54

52

58

56

50

**FIG. 1E**
**PRIOR ART**

**FIG. 2A**          **FIG. 2B**

FIG. 3B

FIG. 3D

FIG. 3A

FIG. 3C

**FIG. 4**

EP 2 328 845 B1

| Module ID | Fiber Material | Fiber OD (microns) | Fiber ID (microns) | Packing Density | Fiber Count | Module Dia. (m) | Core Tube Dia. (m) | Area of Single Fiber $(m^2)$ | Fiber Surface Area $(m^2)$ | Active Fiber Length (m) | Webbing | Supplier |
|---|---|---|---|---|---|---|---|---|---|---|---|---|
| 1 | CTA | 330 | 150 | 45% | 55,400 | 0.1207 | 0.0572 | 0.00079 | 43.7 | 0.762 | Tight | Natco |
| 2 | CTA | 330 | 150 | 20% | 24,600 | 0.1207 | 0.0572 | 0.00079 | 19.4 | 0.762 | Very Loose | Natco |
| 3 | CPP | 300 | 199 | 20% | 25,000 | 0.1207 | 0.0572 | 0.00072 | 17.9 | 0.762 | None | Mitsubishi |
| 4 | CTA | 330 | 150 | 45% | 15,500 | 0.0826 | 0.0572 | 0.00079 | 12.2 | 0.762 | Loose | Natco |

**FIG. 5A**

| Average Results and Conditions | | | | | |
|---|---|---|---|---|---|
| Parameter (Average) | Module 1 | Module 2 | Module 3 | Module 4 | Units |
| Influent Nitrate-N | 10.70 | 10.84 | 12.94 | 17.66 | mg-N/L |
| Effluent Nitrate-N | 2.51 | 4.60 | 5.32 | 3.17 | mg-N/L |
| Product Flow | 0.31 | 0.25 | 0.14 | 0.13 | GPM |
| Recycle Flow | 12.1 | 10.5 | 13.3 | 16.5 | GPM |
| Hydraulic Retention Time | 7.5 | 11.4 | 21.1 | 22.3 | Minutes |
| Fiber Surface Area | 43.7 | 19.4 | 17.9 | 12.3 | $m^2$ |
| pH | 7.35 | 7.15 | 7.02 | 7.39 | |
| Nitrate-N/day | 13724 | 8376 | 5643 | 10611 | mg/day |
| Flux | 314 | 432 | 315 | 866 | $mg\text{-}NO_3\text{-}N/m^2/day$ |
| MBfR Inlet Water Pressure | 13.6 | 12.2 | 12.7 | 11.1 | psig |
| Hydrogen inlet Pressure | 17.6 | 22.7 | 13.8 | 15.9 | psig |

**FIG. 5B**

EP 2 328 845 B1

**FIG. 6A**

**FIG. 6B**

FIG. 6C

FIG. 6D

**Theoretical NO$_3$- fluxes in mg NO$_3$-N/m²/day**

| S, mgN/L | Lf = 10 μm | 50 μm | 100 μm | 150 μm | 200 μm | 250 μm |
|---|---|---|---|---|---|---|
| 0.1 | 320 | 320 | 320 | 320 | 320 | 320 |
| 0.27 | 850 | 860 | 1000 | 1000 | 1000 | 1000 |
| 1 | 2700 | 3050 | 3100 | 3100 | 3100 | 3100 |
| 10 | 3900 | 19000 | 20000 | 20000 | 20000 | 20000 |
| 40 | 4000 | 20000 | 40000 | 48000 | 49000 | 50000 |

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6387262 B
- EP 10270063 A

- US 20020020666 A

**Non-patent literature cited in the description**

- **ADHAM et al.** *AWWA Research Foundation Report,* 2005, 156

- **KLOPFFER, M.H. ; FLACONNÈCHE, B.** *Oil & Gas Science and Technology- Rev. IFP,* 2001, vol. 56 (3